# EUROPÄISCHE PATENTSCHRIFT

(11) **EP 0 914 270 B1**
(45) Veröffentlichungstag und Bekanntmachung des Hinweises auf die Patenterteilung: **27.08.2003**
(21) Anmeldenummer: 97927186.3
(22) Anmeldetag: 16.06.1997
(51) Int. Cl.: B62D 17/00, B60G 13/00

(54) **VORRICHTUNG ZUR STURZEINSTELLUNG**
KING-PIN ADJUSTER
DISPOSITIF D'AJUSTEMENT DE CARROSSAGE

(30) Priorität: 17.06.1996 DE 29610634 U
(43) Veröffentlichungstag der Anmeldung: 12.05.1999
(73) Patentinhaber: Schmack, Hendrawati, 36039 Fulda (DE)
(72) Erfinder: SCHMACK, Bernhard, D-36039 Fulda (DE)
(74) Vertreter: Zwirner, Gottfried
(86) Internationale Anmeldenummer: EP9703124
(87) Internationale Veröffentlichungsnummer: WO97048588

(56) Entgegenhaltungen:
- EP-A- 0 638 448
- DE-A- 3 714 689
- DE-C- 964 748
- GB-A- 2 227 721
- US-A- 2 631 866
- US-A- 5 044 659
- US-A- 5 104 141

## Beschreibung

Die Erfindung bezieht sich auf eine Vorrichtung zur Sturzeinstellung an einem Fahrzeug, bei dem Federbeine und zugehörige Radaufhängungen vorgesehen sind, mit den Merkmalen des Oberbegriffes des Anspruchs 1, sowie auf ein Verfahren der Sturzeinstellung.

Bei vierrädrigen Automobilen läuft der Achszapfen der Vorderräder nicht genau in der Horizontalen, sondern ist leicht geneigt, wobei dieser Neigungswinkel bzw. der Winkel der Radebene gegenüber der Senkrechten als Sturz bezeichnet wird. Der Sturz wird gewöhnlich werksseitig fest eingestellt und muß unter gewöhnlichen Umständen bis zum Lebensende des Automobils nicht erneut eingestellt werden. Nach Unfällen kann es jedoch vorkommen, dass sich die Spurhaltung der Räder des Automobils geändert hat, so dass es wünschenswert ist, die die Spurhaltung beeinflussenden Winkel, darunter den Sturz, einstellen zu können. Das gleiche gilt bei gewissen Reparaturen oder baulichen Veränderungen am Fahrzeug.

Es ist bekannt, den Halter des Federbeins mit wenigstens einem Langloch zu versehen, um den Achsschenkel gegenüber dem Federbein verrücken zu können, bevor die Durchsteckschrauben festgezogen werden (DE 37 14 689 A1). Hier werden jedoch bauliche Sondermaßnahmen am Halter vorausgesetzt, die bei Fahrzeugen üblicherweise nicht vorgesehen sind. Dies trifft auch bei anderen bekannten Sturzeinstellvorrichtungen zu (GB 2 227 721 A; DE 964 748 C) bei denen Bohrungen der Radaufhängung gegenüber dem Normalzustand erweitert werden müssen, um die Sturzeinstellvorrichtung anbringen zu können.

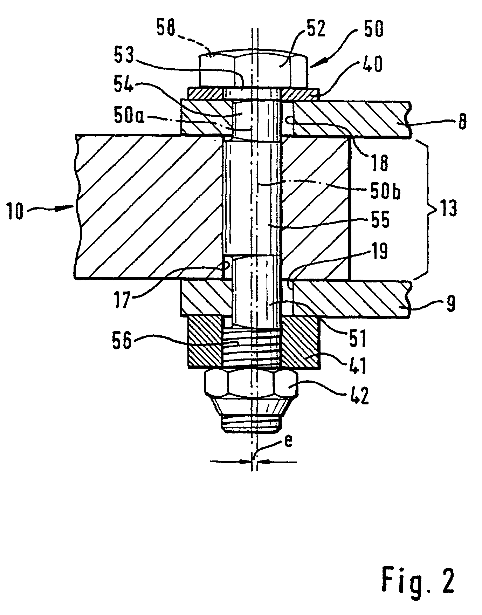

Eine oberbegriffliche Sturzeinstellvorrichtung (US 5 044 659 A) sieht einen Durchsteckschraubbolzen mit einer Keilnut vor, um in einer ersten, nicht gattungsbildenden Ausführungsform nach Fig. 2-5 einen Keil aufzunehmen, der als Exzenter wirkt. Außerdem sind noch eine ringförmige, gezähnte Einstellscheibe mit Betätigungshandgriff und mit Eingriffszapfen, der in den Spalt zwischen Schraubbolzen und der einen Bohrungswand des Halters eingreift, und eine gezähnte, ringförmige Verriegelungsscheibe mit einem Eingriffszapfen vorgesehen, der in die Keilnut des Schraubbolzens eingreift. Die Zähne der Einstellscheibe und der Verriegelungsscheibe sind gehärtet, um sich in die Wandungen des Halters einzugraben. Zur Einstellung des Sturzes werden die Einstellscheibe und die Verriegelungsscheibe im richtigen Drehwinkel positioniert und danach die Mutter festgezogen. In einer zweiten Ausführungsform nach Fig. 6-8 dient der Keil zum Eingriff in der ringförmigen Verriegelungsscheibe, die sich in die Befestigungswände des Halters eingräbt und eine Haltebohrung für den Gewindebereich des Verstellschraubenbolzens bildet. Ein gebogenes und gezähntes Beilageblech (Shim), auf den mittleren Abschnitt des Einstellschraubbolzens aufgesetzt oder, wie in der gattungsbildenden Form, geschweißt, sorgt für einen achsversetzten, vergrößerten Durchmesserbereich.Am Schraubenkopf ist ferner eine Bohrung vorgesehen, um einen Stift aufzunehmen, der in eine Nut der benachbarten gezähnten Verriegelungsscheibe und in die Lücke zwischen Bolzenschaft und der Bohrung der Befestigungswand eingreift. Der Schraubbolzen mit dem angesetzten Beilageblech und dem durchgesteckten Stift muss in der richtigen DrehWinkellage durch die Bohrungen des Halters und des Achsschenkels gesteckt werden, was nur durch mehrfaches Probieren gelingen kann, wenn die optimale Einstellung gewünscht wird. Die bekannte Konstruktion ist kostenaufwendig. Nachteilig ist ferner in den diesbetreffenden Ausführungsformen die starke Schwächung des Kernquerschnittes des Einstellschraubbolzens durch die Keilnut.

Bei einer weiteren bekannten Sturzeinstellvorrichtung (US 5 104 141 A) ist ein Schraubbolzen mit einem exzentrischen Mittelabschnitt verringerten Durchmessers vorgesehen, über den eine exzentrische Hülse geschoben werden kann, die in einer Winkelposition den Schraubbolzen zu einem zylindrischen Schraubbolzen ergänzt bzw. bei Verdrehung einen Schraubbolzen mit Exzenter bildet. Nachteilig ist hier ebenfalls die starke Reduzierung des Kernquerschnittes des Verstellschraubbolzens und der Aufwand für die Herstellung und Montage der exzentrischen Hülse. Dieser Schraubbolzen wird in einer mittleren Stellung des Sturzes montiert und danach in Richtung auf negative oder positive Winkelwerte des Sturzes gedreht, bis der richtige Wert erreicht ist.

Der Erfindung liegt die Aufgabe zugrunde, eine einfache Möglichkeit der nachträglichen Sturzeinstellung anzugeben, bei der der Verstellungsschraubbolzen möglichst wenig geschwächt ist.

Die gestellte Aufgabe wird aufgrund des Anspruchs 1 bzw. 6 gelöst und durch die weiteren Merkmale der Unteransprüche weiterentwickelt und ausgestaltet.

Zur Einstellung des Sturzes wird ein Schraubbolzen mit Nocken oder Exzenter zur Bildung des dickeren Durchmesserbereiches des Verstellschraubbolzens verwendet, der das Federbein mit der Radaufhängung verbindet. An dem Schraubbolzen selbst ist eine Markierung angebracht, um dessen Winkelstellung hinsichtlich des Nockens oder Exzenters kenntlich zu machen.

Durch Änderung der Winkelstellung des Nockens oder Exzenters wird, ausgehend von einer Extremstellung, die Stellung des Führungsgelenks im Raum verändert und damit auch der Sturz. Durch Festziehen der Mutter der Schraubverbindung wird die eingestellte Stellung fixiert.

Die Erfindung wird anhand der Zeichnung beschrieben. Dabei zeigt:
- Fig. 1: ein Federbein mit angeschraubtem Achsschenkel, von der Seite gesehen,
- Fig. 2: einen Schnitt entlang der Linie II-II in Fig. 1, in vergrößerter Darstellung, mit einer Verstelleinrichtung.

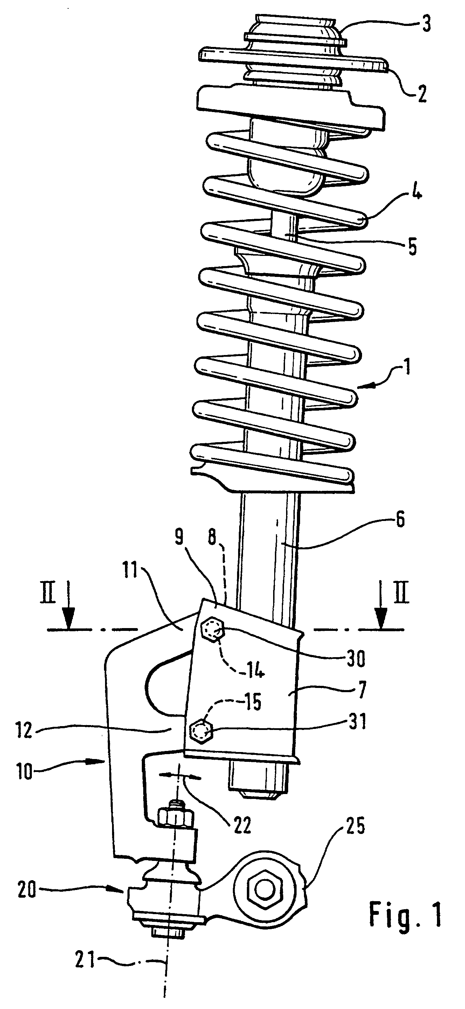

Fig. 1 zeigt ein Federbein 1, das bei 2 an der Karosserie des Fahrzeugs abgestützt ist und ein Federbeinstützlager 3, eine Schraubenfeder 4, eine Kolbenstange 5 sowie einen Stoßdämpferzylinder 6 aufweist. Am Stoßdämpferzylinder 6 ist ein Halter 7 befestigt, der um das untere Ende des Zylinders 6 herumreicht und mit diesem verschweißt sein kann sowie zwei wangenartige Befestigungswände 8 und 9 besitzt, um einen Achsschenkel 10 daran zu befestigen. Der Achsschenkel 10 weist einen gegabelten Fortsatz mit zwei Enden 11, 12 auf, die in den Zwischenraum 13 zwischen den Wänden 8, 9 hineinreichen. Am unteren Ende des Achsschenkels 10 ist ein Führungsgelenk 20 angebracht, dessen Achse 21 im Raum den Sturz bestimmt. Das Führungsgelenk 20 wird von Zugstreben 25gehalten, die an einem nicht dargestellten Vorderachsträger angelenkt sind.

Wie aus Fig. 2 ersichtlich, erstrecken sich die Befestigungswände 8 und 9 des Halters 7 parallel zueinander und bestimmen den Zwischenraum 13, in den der gegabelte Achsschenkelfortsatz mit den Enden 11, 12 hineinreicht. Die Teile 7, 10 (Fig. 1) werden durch eine obere (14)und untere (15) Bohrung durchsetzt, durch welche sich ein oberer (konventioneller) Schraubbolzen 30 bzw. ein unterer (konventioneller) Schraubbolzen 31 erstrecken. Jede Bohrung 14, 15 im Halter 7 weist demgemäß einen (meist runden) Einsteckbohrungsbereich 18 (Fig. 2) und einen (meist runden) Austrittsbohrungsbereich 19 und im Achsschenkel 10 eine zylindrische Bohrung 17 auf.

Je nach der Größe des einzustellenden Sturzes werden ein (30) oder zwei (30 + 31) Schraubenbolzen durch solche nach der Erfindung ersetzt. Die Erfindung kann bei zylindrischen Bohrungen 18 , 19 des Halters, aber auch bei Langlöchern des Halters zum Einsatz kommen. Für unterschiedliche Bohrungsweiten werden jeweils passende spezielle Verstellschraubbolzen 50 (Fig. 2) bereitgestellt, so dass praktisch alle vorkommenden Fahrzeugtypen bedient werden können.

Der Verstellschraubbolzen 50 weist eine Achse 50a auf, zu der eine Exzenterachse 50b in Abstand e gebildet wird. Die Exzenterebene wird durch eine Markierung 58 sichtbar gemacht, die in radialer Richtung vom Durchstoßpunkt der Achse 50a als flaches Loch, Brennfleck oder kerbe angebracht ist. Auf der Exzenterachse 50b liegen ein Schaftabschnitt 51 und ein weiterer Schaftabschnitt 54. Die übrigen Elemente der Schraube 50 liegen symmetrisch zur Achse 50a, nämlich der Kopf 52, ein Zapfen oder Bund 53, ein Nockenzapfen 5 und ein Gewindebereich 56. Die Elemente 53, 55 und 56 weisen den gleichen Außendurchmesser auf, beispielsweise 16 mm. Der Durchmesser der Elemente 51 und 54 beträgt dann 14 mm. Es können aber auch andere Abmaße verwendet werden, beispielsweise 14 mm für die Elemente 53, 55 und 56 sowie 12 mm für 51 und 54. Schließlich ist es auch möglich, die Elemente 53 und 55 gegenüber 56 etwas dicker zu wählen, beispielsweise 17 mm gegenüber M 16 des Gewindebereichs 56 bzw. 15 mm gegenüber M 14 des Gewindebereichs 56. Für die Länge der Schraube ohne Kopf wird ein Bereich von 75 bis 95 mm in Betracht gezogen. Der Schraubbolzen 50 wird roh im Gesenk geschmiedet und das Gewinde in konventioneller Weise hergestellt. Als Material des Schraubbolzens wird hochfester Stahl verwendet, dessen Festigkeit höher ist als der der üblicherweise verwendeten Schrauben zur Befestigung des Federbeins 1 am Achsschenkel 10.

Zu der Sturzeinstellvorrichtung zählen noch zwei Unterlegscheiben 40 und 41 sowie eine Mutter 42. Die Mutter 42 ist mit einer Einrichtung zur Verhinderung der selbständigen Lockerung versehen und wird nach Einstellung der Teile unverrückbar festgezogen.

Die Vorrichtung zur Sturzeinstellung wird wie folgt angewendet:

Zunächst wird der Radsturz des Fahrzeugs ermittelt, an dem die Sturzeinstellung vorgenommen werden soll. Die Räder an der betreffenden Achse des Fahrzeugs werden demontiert. Die Schraube an der Position 30 der Fig. 1 wird gelöst und entfernt. Statt dessen wird die Schraube 50 an der freigewordenen Bohrung 14 montiert. Es ist darauf zu achten, die richtige Schraubengröße und -länge aus dem vorhandenen Satz auszuwählen. Eventuell vorher demontierte Zusatzhalterungen werden wie zuvor montiert. Danach wird der Sturz auf seinen maximal negativen oder positiven Winkelwert gebracht, wobei die Schraube 50 mit ihrer Markierung 58 für den negativen Sturz nach innen bzw. für den positiven Sturz nach außen zeigt. Der Radträger des Fahrzeugs wird durch Anwendung von Zug oder Druck in eine Endlage gebracht, wie sie der Stellung der Markierung 58 der Schraube 50 entspricht. Die hergestellte Verbindung wird durch leichtes Anziehen der Mutter 42 arretiert, damit es bei Belastung durch das Fahrzeuggewicht zu keiner Verstellung des Sturzes kommt. Nunmehr werden das Rad oder die Räder montiert und die Meßvorrichtung für den Sturz eingebaut. Die Schraube 50 wird am Schraubkopf 52 gedreht, wodurch die Wände 8 und 9 des Halters 7 relativ zu dem Achsschenkel 10 verschoben werden. Der Doppelpfeil 22 in Fig. 1 zeigt die beiden Richtungen an, in welchen der Achsschenkel 10 verschoben bzw. die Achse 21 geneigt werden kann, um den Sturz richtig einzustellen. Der Kopf 52 wird so lange gedreht, bis der gewünschte Winkel des Sturzes erreicht ist. Das betreffende Rad wird anschließend wieder vorsichtig demontiert, ohne die vorgenommene Einstellung des Sturzes zu verändern. Die Schraubverbindung wird durch Anziehen der Mutter 42 (ohne Veränderung der Stellung des Kopfes 52) sowie durch Anziehen der Mutter der Schraube 31 fixiert, wobei ein Drehmoment zwischen 90 und 110 Nm angewendet wird. Das Rad wird erneut montiert und die Radschrauben oder -muttern mit dem vorgesehenen Drehmoment festgezogen. Es wird darauf geachtet, daß der Reifen des Rades über genügend Abstand zu allen feststehenden Fahrzeugteilen verfügt.

## Patentansprüche

1. Vorrichtung zur Sturzeinstellung an einem Fahrzeug, bei dem Federbeine und zugehörige Radaufhängungen vorgesehen sind,
wobei jedes Federbein (1) einen Halter (7) aufweist, der an einem Stoßdämpferzylinder (6) befestigt ist und zwei parallele Befestigungswände (8, 9) besitzt, die einen Zwischenraum (13) bestimmen und mit zwei Bohrungen (14, 15) versehen sind, die jeweils einen Bohrungsabschnitt (18) für die eine Befestigungswand (8) und einen Bohrungsabschnitt (19) für die andere Befestigungswand (9) aufweisen,
wobei jede Radaufhängung ferner ein Führungsgelenk (20) aufweist, das über einen Achsschenkel (10) mit dem Halter (7) verbunden ist,
wobei der Achsschenkel (10) mit einem Achsschenkelfortsatz (11, 12) in den Zwischenraum (13) des Halters (7) hineinreicht und der Achsschenkelfortsatz zwei Querbohrungen (17) besitzt, die zu den Bohrungsabschnitten (18, 19) des Halters (7) fluchten, und
wobei Schraubbolzen (30, 31, 50) mit passender axialer Länge durch die Bohrungen des Halters (7) und die Querbohrungen (17) des Achsschenkelfortsatzes (11, 12) hindurchreichen, und die jeweils einen Gewindebereich (56) aufweisen, um einen Achsschenkel (10) am zugehörigen Federbein (1) mit jeweils einer Mutter (42) zu befestigen, die auf den zugehörigen Gewindebereich (56) aufgeschraubt wird;
mit folgenden Merkmalen der Sturzeinstellvorrichtung:
wenigstens einer der Schraubbolzen ist ein Verstellschraubbolzen (50), der Mittel zur Bildung unterschiedlicher Dickenabmessungen entlang der Länge des Schraubbolzens aufweist, die einen axialen Querversatz (e) gegeneinander in einer radialen Richtung aufweisen und ein Verstellmaß bestimmen, wobei die Mittel für die größeren Dickenabmessungen passend zum Querschnitt der Querbohrung (17) des Achsschenkelfortsatzes (11, 12) gewählt sind, in der der betreffende Verstellschraubbolzen (50) montiert ist und die Mittel für die kleineren Dickenabmessungen zum Zusammen wirken mit den Befestigungswänden (8, 9) Schaftabschnitte (51, 54) kleineren Durchmessers darstellen;
der Verstellschraubbolzen (50) umfaßt eine Markierung (58), welche die radiale Richtung des axialen Querversatzes (e) anzeigt,
**dadurch gekennzeichnet,**
**daß** die Mittel für die größeren Dickenabmessungen einen integralen Schaftabschnitt des Verstellschraubbolzens (50) enthalten, der zwischen den Schaftabschnitten (51, 54) kleineren Durchmessers angeordnet ist und einen Nockenzapfen (55) größeren Durchmessers bildet, und
**daß** der Gewindebereich (56) des Verstellschraubbolzens (50) einen Durchmesser aufweist, der größer als der kleinere Durchmesser der Schaftabschnitte (51, 54) ist, den größeren Durchmesser des Nockenzapfens (55) jedoch nicht übersteigt.

2. Vorrichtung nach Anspruch 1,
**dadurch gekennzeichnet, dass** sich der axiale Querversatz (e) in einer Schraubbolzenachse (50a) und einer Exzenterachse (50b) ausdrücken, wobei ein Schraubenkopf (32), der Nockenzapfen (55) und der Gewindebereich (56) coaxial zur Schraubbolzenachse (50a) und die Schaftabschnitte (51, 54) kleineren Durchmessers coaxial zur Exzenterachse (50b) angeordnet sind.

3. Vorrichtung nach Anspruch 1 oder 2,
**dadurch gekennzeichnet, dass** der Durchmesserunterschied zwischen dem Gewindebereich (56) und dem kleineren Durchmesser der Schaftabschnitte (51, 54) etwa 2 mm beträgt.

4. Vorrichtung nach einem der Ansprüche 1 bis 3,
**dadurch gekennzeichnet, dass** der axiale Querversatz etwa 1 mm beträgt.

5. Vorrichtung nach Anspruch 1,
**dadurch gekennzeichnet, dass** der Verstellschraubbolzen (50) einen Schraubkopf (52) umfaßt, der die Markierung (58) trägt und an dem ein zylindrischer Zapfen (53) angebracht ist.

6. Verfahren zur Sturzeinstellung an einem Fahrzeug mit einer Vorrichtung nach Anspruch 1,
**dadurch gekennzeichnet,**
**daß** der Verstellschraubbolzen (50) mit einer Drehwinkellage montiert wird, welche einer Extremstellung des Sturzes entspricht, und
**daß** ausgehend von dieser Extremstellung der Verstellschraubbolzen (50) gedreht wird, bis die gewünschte Winkelstellung des Sturzes erreicht wird, wonach die Mutter (42) festgezogen wird.

## Claims

1. An arrangement for camber adjustment on a vehicle having spring struts and associated wheel suspensions,
each spring strut (1) having a holder (7) which is secured to a damper cylinder (6) and has a pair of parallel securing walls (8, 9) which define an intermediate space (13) and are provided with two bores (14, 15) which each have a bore portion (18) for the one securing wall (8) and a bore portion (19) for the other securing wall (9);
each wheel suspension further including a steering joint (20) which is connected to the holder (7) by way of a steering knuckle (10),
the steering knuckle (10)including a steering knuckle extension (11, 12) to extend into the intermediate space (13) of the holder (7) and the steering knuckle extension having a pair of transverse bores (17) which are aligned with the bore portions (18, 19) of the holder (17), and
screw bolts (30, 31, 50) of a suitable axial length to extend through the bores of the holder (7) and the transverse bores (17) in the steering knuckle extension (11, 12) and which are each provided with a respective screw threaded region (56) to secure a respective steering knuckle (10) to the associated spring strut (1) by virtue of a nut (42) which is screwed onto the associated screw threaded region (56);
the camber adjustment arrangement comprising:
at least one screw bolt is an adjustment screw bolt (50) which includes means for forming different thickness dimensions along the length of the screw bolt which show an offset (e) transverse to the axis in a radial direction and defining an adjustment value;
the means forming the larger thickness dimensions being chosen so as to fit to the cross section of such transverse bore (17) of the steering knuckle extension (11, 12) in which the respective adjustment screw bolt (50) is mounted, and
the means for forming the smaller thickness dimensions, for co-operating with the securing walls (8, 9), being shaft portions (51, 54) of smaller diameter;
the adjustment screw bolt (50) including a marking (58) which indicates the radial direction of the offset (e) transverse to the axis,
**characterised in that**
the means forming the bigger thickness dimensions comprise an integral shaft portion of the adjustment screw bolt (50) which is arranged between the shaft portions (51, 54) of smaller diameter and forming a cam section (55) of bigger diameter, and
**in that** the threaded region (56) of the adjustment screw bolt (50) has a diameter which is larger than the smaller diameter of the shaft portions (51, 54), however is not larger than the bigger diameter of the cam section (55).

2. The arrangement of claim 1,
wherein the offset (e) transverse to the axis is expressed in a screw bolt axis (50a) and an excenter axis (50b), a screw bolt head (52), the cam section (55) and the threaded region (56) being arranged coaxially to the screw bolt axis (50a), and the shaft portions (51, 54) of smaller diameter being arranged coaxially to the excenter axis (50b).

3. The arrangement of claims 1 or 2,
wherein the difference in diameter between the threaded region (56) and the smaller diameter of the shaft portions (51, 54) is on the range of 2mm.

4. The arrangement of any of the claims 1 to 3,
wherein the offset transverse to the axis is in the range of 1mm.

5. The arrangement of claim 1,
wherein the adjustment screw bolt (50) comprises a screw head (52) carrying the marking (58) and including a cylindrical trunnion portion (53).

6. A method for adjusting the camber on a verhicle by using an arrangement according to claim 1, **characterized**
**in that** the adjustment screw bolt (50) is inserted in an angular position corresponding to an extreme position of the camber, and
**in that** starting from this extreme position, the adjustment screw bolt (50) is rotated until the desired angular position of the camber is reached, and after that the nut (42) is tightened.

## Revendications

1. Dispositif de réglage du carrossage d'un véhicule, pour lequel sont prévues des jambes de force à ressort et des supensions de roues associées,
chaque jambe de force à ressort (1) comportant un support (7) qui est fixé sur un cylindre d'amortisseur (6), et qui possède deux parois de fixation parallèles (8, 9) qui définissent un espace intermédiaire (13), et qui sont munies de deux perçages (14, 15) comportant chacun un tronçon de perçage (18) pour l'une des parois de fixation (8), et un tronçon de perçage (19) pour l'autre paroi de fixation (9),
chaque suspension de roue comportant en outre un joint de coulisse (20) qui est relié au support (7) par l'intermédiaire d'une fusée d'essieu (10),
la fusée d'essieu (10) s'engageant dans l'espace intermédiaire (13) du support (7) par un prolongement (11, 12) de fusée d'essieu, et le prolongement de fusée d'essieu comportant deux perçages transversaux (17) qui sont alignés par rapport aux tronçons de perçage (18, 19) du support (7) , et
des boulons filetés (30, 31, 50) d'une longueur axiale adaptée traversant les perçages du support (7) et les perçages transversaux (17) du prolongement (11, 12) de fusée d'essieu, qui comportent chacun une partie filetée (56) afin de fixer une fusée d'essieu (10) sur la jambe de force à ressort (1) associée à l'aide d'un écrou (42), qui est vissé sur la partie filetée (56) associée ;
le dispositif de réglage du carrossage présentant les particularités suivantes :
l'un au moins des boulons filetés est un boulon fileté de réglage (50) qui comporte des moyens destinés à engendrer différentes cotes d'épaisseur le long de la longueur du boulon fileté, qui présentent dans une direction radiale un décalage axial transversal (e) les uns par rapport aux autres, et définissent une cote de réglage, les moyens pour les cotes d'épaisseur plus importantes étant choisis afin d'être adaptés à la section transversale du perçage transversal (17) du prolongement (11, 12) de fusée d'essieu dans lequel est monté le boulon fileté de réglage (50) concerné, et les moyens pour les cotes d'épaisseur plus faibles étant constitués de tronçons de tige (51, 54) de diamètre plus faible afin d'agir conjointement avec les parois de fixation (8, 9) ;
le boulon fileté de réglage (50) comporte un marquage (58) qui indique la direction radiale du décalage axial transversal (e),
**caractérisé en ce que**
les moyens pour les cotes d'épaisseur plus importantes comprennent un tronçon de tige intégral du boulon fileté de réglage (50), qui est disposé entre les tronçons de tige (51, 54) de diamètre plus faible, et qui forme un tourillon de came (55) de diamètre plus important, et
**en ce que** le diamètre de la partie filetée (56) du boulon fileté de réglage (50) est supérieur au diamètre plus faible des tronçons de tige (51, 54), mais ne dépasse pas le diamètre plus important du tourillon de came (55).

2. Dispositif selon la revendication 1,
**caractérisé en ce que** le décalage axial transversal (e) s'exprime en un axe (50a) de boulon fileté et en un axe (50b) d'excentrique, une tête de vis (32), le tourillon de came (55) et la partie filetée (56) étant disposés coaxialement à l'axe (50a) de boulon fileté, et les tronçons de tige (51, 54) de diamètre plus faible étant disposés coaxialement à l'axe (50b) d'excentrique.

3. Dispositif selon la revendication 1 ou 2,
**caractérisé en ce que** la différence de diamètre entre la partie filetée (56) et le diamètre plus faible des tronçons de tige (51, 54) est de l'ordre de 2 mm.

4. Dispositif selon l'une quelconque des revendications 1 à 3,
**caractérisé en ce que** le décalage axial transversal est de l'ordre de 1 mm.

5. Dispositif selon la revendication 1,
**caractérisé en ce que** le boulon fileté de réglage (50) comporte une tête de vis (52) qui porte le marquage (58), et sur laquelle est fixée un tourillon cylindrique (53).

6. Procédé destiné au réglage du carrossage d'un véhicule avec un dispositif selon la revendication 1,
**caractérisé en ce que**
le boulon fileté de réglage (50) est monté dans une position d'angle de rotation qui correspond à une position extrême du carrossage, et
**en ce que** le boulon fileté de réglage (50) est tourné à partir de cette position extrême jusqu'à ce que la position angulaire souhaitée du carrossage soit atteinte, l'écrou (42) étant ensuite serré.
